# EUROPEAN PATENT APPLICATION

(11) **EP 4 761 413 A1**
(43) Date of publication of application: **17.06.2026**
(21) Application number: 24864140.9
(22) Date of filing: 07.06.2024
(51) Int. Cl.: H04W 72/0453, H04W 72/04

(54) **CARRIER AGGREGATION METHOD AND SYSTEM, ELECTRONIC DEVICE, AND STORAGE MEDIUM**

(30) Priority: 12.09.2023 CN 202311180986
(71) Applicant: ZTE CORPORATION, Shenzhen, Guangdong 518057 (CN)
(72) Inventor: BI, Feng, Shenzhen, Guangdong 518057 (CN); LU, Youxiong, Shenzhen, Guangdong 518057 (CN); XING, Weimin, Shenzhen, Guangdong 518057 (CN); CHEN, Jie, Shenzhen, Guangdong 518057 (CN); MIAO, Ting, Shenzhen, Guangdong 518057 (CN); HE, Haigang, Shenzhen, Guangdong 518057 (CN); HU, Yuzhou, Shenzhen, Guangdong 518057 (CN)
(74) Representative: Ziebig Hengelhaupt Intellectual Property Attorneys Patentanwaltskanzlei PartGmbB
(86) International application number: PCT/CN2024/098088
(87) International publication number: WO 2025/055415

(57) **Abstract**

Provided in the embodiments of the present application are a carrier aggregation method and system, an electronic device, and a storage medium. The method comprises: at a first entity and via configuration or pre-configuration, determining a carrier group and carriers included in the carrier group.

## Description

### CROSS-REFERENCE TO RELATED APPLICATIONS

The present application is proposed based on and claims priority to Chinese Application No. 202311180986.0, filed to the Chinese Patent Office on September 12, 2023, entitled "CARRIER AGGREGATION METHOD AND SYSTEM, ELECTRONIC DEVICE, AND STORAGE MEDIUM", the disclosure of which is hereby incorporated by reference in its entirety.

### TECHNICAL FIELD

The present application relates to the field of wireless communication technology, particularly to a carrier aggregation method, system, electronic device, and storage medium.

### BACKGROUND

With the continuous advancement of radio technology, various radio services have emerged in large numbers. In addition to cellular services between base stations and terminals, in Long Term Evolution (LTE) and New Radio (NR) systems, there are also services such as Vehicle to Anything (V2X). The communication link for V2X services is called Sidelink (SL), and the main channels include Physical Sidelink Control Channel (PSCCH) and Physical Sidelink Shared Channel (PSSCH), where PSCCH carries sidelink control information and PSSCH carries service data. When there is service transmission between devices, the service data between devices is not forwarded by other network devices, but is directly transmitted from the data source device to the target device, that is, direct communication between devices. It can be understood that the device can refer to a User Equipment (UE) with V2X function. SL can be divided into three main communication scenarios: the first scenario (In coverage), where both the data source device and the target device are within the coverage range of the base station, the second scenario (Partial coverage), where one of the data source device and the target device is within the coverage range of the base station and the other device is beyond the coverage range of the base station; and the third scenario (out of coverage), where both the data source device and the target device are beyond the coverage range of the base station. SL can be divided into two main communication modes. In the first type of communication mode, the resources for devices to send SL signals come from the scheduling of base stations, which can be referred to as Mode 3 in LTE and Mode 1 in NR. In the second type of communication mode, the device autonomously selects resources from the resource pool based on the resource selection policy within the network or pre-configured resource pool. The resource selection policy includes Sensing mechanism, Partial Sensing mechanism, and Random selection mechanism. The second type of communication mode can be referred to as Mode 4 in LTE and Mode 2 in NR.

At present, with the advancement of technology, Carrier Aggregation (CA) needs to be considered in V2X deployment scenarios. If each component carrier (CC) of the CA is significantly different in frequency, the channel conditions or communication requirements of these CCs will also vary greatly. How to determine the relevant information of carrier aggregation in V2X deployment scenarios has become an urgent problem to be solved.

### SUMMARY

The embodiments of the present application aim to provide a carrier aggregation method, system, electronic device, and storage medium, which aims to determine carrier aggregation information in V2X deployment scenarios, improve wireless communication quality, and enhance user experience.

The embodiments of the present application provide a carrier aggregation method, comprising: determining a carrier group and carriers included in the carrier group at a first entity via configuration or pre-configuration.

The embodiments of the present application further provide a carrier aggregation system, comprising: a carrier aggregation apparatus, used to determine a carrier group and carriers included in the carrier group at a first entity via configuration or pre-configuration.

The embodiments of the present application further provide an electronic device, comprising: one or more processors; a memory, used to store one or more programs; when the one or more programs are executed by the one or more processors, causing the one or more processors to implement the carrier aggregation method according to any one of the embodiments of the present application.

The embodiments of the present application further provide a computer-readable storage medium, storing one or more programs, which are executed by one or more processors to implement the carrier aggregation method according to any one of the embodiments of the present application.

It should be understood that the content described in this section is not intended to identify key or important features of the embodiments of the present application, nor is it intended to limit the scope of the present application. The other features of the present application will be easily understood through the following description.

### BRIEF DESCRIPTION OF DRAWINGS

In order to more clearly illustrate the technical solution of the embodiments of the present application, the accompanying drawings required for describing the embodiments will be briefly introduced below. Apparently, the accompanying drawings in the following description are some embodiments of the present application. For those skilled in the art, other accompanying drawings can also be obtained based on these drawings without exerting creative efforts.
Fig. 1 is a flowchart of a carrier aggregation method provided in the embodiments of the present application.
Fig. 2 is a flowchart of another carrier aggregation method provided in the embodiments of the present application.
Fig. 3 is a schematic diagram of the structure of a carrier aggregation apparatus provided in the embodiments of the present application.
Fig. 4 is a schematic diagram of the structure of an electronic device provided in the embodiments of the present application.

### DETAILED DESCRIPTION

It should be understood that the specific implementation described here is only for the purpose of explaining the present application and is not intended to limit the present application.

In the subsequent description, the use of suffixes such as "module", "component", or "unit" to represent elements is only for the purpose of facilitating description of the present application and does not have a unique meaning in itself. Therefore, "module", "component", or "unit" can be used in a mixed manner.

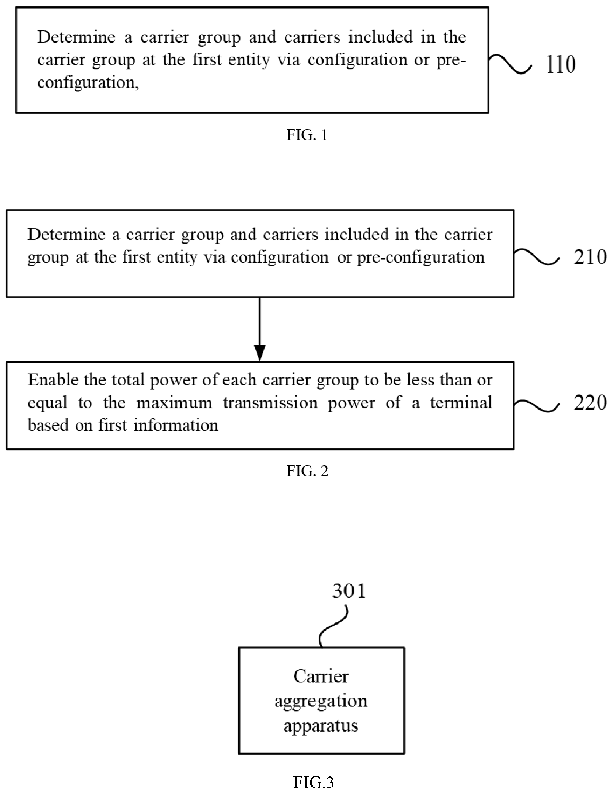

Fig. 1 is a flowchart of a carrier aggregation method provided in the embodiments of the present application, which is applicable to the determination of carrier aggregation related information in V2X deployment scenarios. The method can be executed by a carrier aggregation apparatus, which can be implemented by software and/or hardware. Referring to Fig. 1, the method provided in the embodiments of the present application include the following steps.

At step 110: a carrier group and carriers included in the carrier group are determined at a first entity via configuration or pre-configuration.

In the embodiments of the present application, the first entity can be an entity that determines carrier aggregation related information within a carrier aggregation system. The first entity may include one or more of a network node, a terminal node, a radio resource control layer, a radio link control layer, a medium access control layer, or a physical layer. The carrier group can be a combination of carriers used for carrier aggregation, and the carrier group can be determined at the first entity via configuration or pre-configuration. It is understood that the carriers included in each carrier group may also be determined at the first entity via configuration or pre-configuration.

Furthermore, based on the above embodiments of the application, the first entity comprises at least one of: a network node, a terminal node, a radio resource control layer, a radio link control layer, a medium access control layer, or a physical layer.

In the embodiments of the present application, the carrier aggregation system can determine carrier groups and the carriers included in each carrier group via configuration or pre-configuration in entities such as network nodes, terminal nodes, radio resource control layers, radio link control layers, medium access control layers, and physical layers.

In some embodiments of the present application, the number of carrier groups is configured based on at least one bit, and the number of bits is determined by the maximum number of carrier groups.

In the embodiments of the present application, one or more bits indicating the number of carrier groups can be configured at the first entity via configuration or pre configuration, and the number of configured bits can be determined by the maximum number of carrier groups. For example, each bit can identify one carrier group, and the maximum number of bits for the carrier group can be configured to indicate the number of carrier groups. For example, a binary value composed of one or more bits can be used to represent the number of carrier groups. Binary values "00", "01", "10", and "11" represent the number of carrier groups as 1 carrier group, 2 carrier groups, 3 carrier groups, and 4 carrier groups, respectively. The number of bits can be determined by N=log2 (M), where N is the number of carrier groups and M can identify the maximum number of carrier groups.

In an exemplary implementation, N bits can be configured to indicate the number of carrier groups. The value of N can be determined by N=log2 (M), where M represents the maximum number of carrier groups. Assuming M=4, the number of binary bits required is 2 bits. Binary values "00", "01", "10", and "11" represent the number of carrier groups as 1 carrier group, 2 carrier groups, 3 carrier groups, and 4 carrier groups, respectively. When the number of carrier group is configured or pre-configured as "00", it indicates that all carriers participating in carrier aggregation are divided into 1 carrier group, and the carrier group index is CG0; When the number of carrier groups is configured or pre-configured as "01", it indicates that all carriers participating in carrier aggregation are divided into 2 carrier groups, and the carrier group indexes are CG0 and CG1, respectively; When the number of carrier groups is configured or pre-configured as "10", it indicates that all carriers participating in carrier aggregation are divided into 3 carrier groups, and the carrier group indexes are CG0, CG1 and CG2, respectively; When the number of carrier groups is configured or pre-configured as "11", it indicates that all carriers participating in carrier aggregation are divided into 4 carrier groups, and the carrier group indexes are CG0, CG1, CG2 and CG3, respectively.

In the embodiments of the present application, the carriers included in the carrier group are determined based on a carrier index or a cell index.

In the embodiments of the present application, when being determined at the first entity the carriers included can be determined by the carrier index or cell index. For example, assuming that the carrier indexes or cell indexes are C0, C1, C2,..., C9, and the number of carrier groups is configured or pre-configured as "01", that is, all carriers participating in carrier aggregation are divided into two carrier groups, with carrier group indexes CG0 and CG1 respectively. If CG0 is configured or pre-configured to include carrier indexes or cell indexes {C0, C5, C6}, and CG1 is configured or pre-configured to include carrier indexes or cell indexes {C1}, then the carriers included in each carrier group can be determined by the carrier indexes or cell indexes.

In the embodiments of the present application, the method further comprises that a carrier group function is enabled or disabled via at least one of configuration or pre-configuration.

In an embodiment, the carrier group function can be enabled or disabled via configuration or pre-configuration. For example, an indicator bit indicating the enablement or disablement of a carrier aggregation function can be configured or pre-configured. The binary value "0" corresponding to an enabling or disabling signaling for the carrier group function on the indicator bit indicates enabling the carrier group function; while the binary value "1" corresponding to the same indicates disabling the carrier group function.

In the embodiments of the present application, the method further comprises that a group level is determined via configuration or pre-configuration, wherein the group level comprises at least one of a carrier group level or a frequency band level.

In the embodiments of the present application, the group level of the carrier group can also be determined. The group level can be determined via configuration or pre-configuration. The group level can include carrier group level, frequency band level, etc.

In an exemplary implementation, the group level can be determined via configuration or pre configuration, for example, the binary value "0" corresponding to the group level signaling represents the carrier group level, that is, several carriers correspond to one carrier group; the binary value "1" represents the frequency band level, that is, one frequency band corresponds to one carrier group.

In the embodiments of the present application, the carriers included in the carrier group are configured with at least one bandwidth part.

In the embodiments of the present application, the flexibility of Bandwidth Part (BWP) within the carrier group can be increased, and the carriers within the carrier group can be configured with one or more BWPs.

Furthermore, based on the above application embodiments, each carrier is configured with one bandwidth part, the bandwidth parts configured for different carriers have different numbers of symbols, and the carriers of which the bandwidth parts have the same number of symbols form the carrier group.

In an embodiment, each carrier can be configured with one bandwidth part, and the numbers of symbols in the bandwidth parts can be different. Only carriers with the same number of symbols form the carrier group, that is, the bandwidth parts configured for the carriers included in the carrier group are the same in the number of symbols.

Furthermore, based on the above application embodiments, each carrier is configured with at least two bandwidth parts, the bandwidth parts within the carrier or between the carriers have different numbers of symbols, and the carriers of which the bandwidth parts have the same number of symbols form the carrier group.

In the embodiments of the present application, each carrier can be configured with multiple bandwidth parts, and multiple bandwidth parts within the carrier can be different, or multiple bandwidth parts among the carriers can be different. It is ensured that the bandwidth parts configured for carriers in each carrier group have the same numbers of symbols, that is, the carriers of which the bandwidth parts have the same number of symbols form the carrier group..

Furthermore, based on the above application embodiments, the same synchronization reference is used within the carrier group, and different synchronization references are used among different carrier groups.

In the embodiments of the present application, for the determined carrier groups, the same synchronization reference can be used within the carrier group, while different carrier groups can use different synchronization references.

In an exemplary implementation, assuming that synchronization references are determined for two carrier groups CG0 and CG1, respectively, the carriers within CG0 use the first synchronization reference, while the carriers within CG1 use the second synchronization reference. That is, carriers within the same carrier group use the same synchronization reference, while carriers in different carrier groups can use different synchronization references.

Based on the above application embodiments, the synchronization reference comes from a synchronization source of a specific carrier or a synchronization source of a specific node.

Fig. 2 is a flowchart of another carrier aggregation method provided in the embodiments of the present application, referring to Fig. 2, the method provided in the embodiments of the present application include the following steps.

At step 210: a carrier group and carriers included in the carrier group are determined at a first entity via configuration or pre-configuration.

At step 220: the total power of each carrier group is enabled to be less than or equal to the maximum transmission power of the terminal based on first information, wherein the first information comprises at least one of carrier group priority, carrier priority, channel priority, service priority, priority indicated by the sidelink control information, or pre-configured priority.

In the embodiments of the present application, the total power of each carrier group can be determined based on the first information to enable that the total power of each carrier group is less than or equal to the maximum transmission power of the terminal. The first information may comprise one or more of carrier group priority, carrier priority, channel priority, service priority, priority indicated by the sidelink control information, or pre-configured priority. The channel priority comprises the priority of PSSCH, PSSCH, PSFCH or S-SB, and the service priority comprises the priority of unicast service, multicast service, or broadcast service.

Furthermore, based on the above application embodiments, if the total power of each carrier group is greater than the maximum transmission power of the terminal, at least one of the carrier group, carrier, channel, or service is discarded according to the first information.

In the embodiments of the present application, if the total power of the carrier group determined by the first information is greater than the maximum transmission power of the terminal, one or more of the carrier group, carrier, channel, and service is/are discarded according to the priority in the first information, so as to enable that the total power of the carrier group is less than or equal to the maximum transmission power of the terminal.

In an exemplary implementation, taking carrier group priority as an example to illustrate the discarding process. For example, if the priority of the carrier group CG0 is higher than that of the carrier group CG1, and the total power of multiple carrier groups is greater than the maximum transmission power of the terminal, the power will be allocated to the carrier group CG0 first, and the remaining power will be allocated to the carriers within carrier group CG1. Alternatively, the carriers within CG1 will not transmit data, or the carriers within CG1 will be discarded.

In another exemplary implementation, taking PSSCH priority as an example to illustrate the discarding process. For example, the carriers in the carrier group CG0 carry PSSCH0 and PSSCH1 respectively, and the carriers in the carrier group CG1 carry PSSCH2 and PSSCH3 respectively. The priority order of PSSCH from high to low is that PSSCH0 is higher than PSSCH2, PSSCH2 is higher than PSSCH1, and PSSCH1 is higher than PSSCH3. If the total power of multiple carrier groups is greater than the maximum transmission power of the terminal, the lower priority PSSCH is discarded until the total power of multiple carrier groups is less than or equal to the maximum transmission power of the terminal. That is, PSSCH3 can be discarded first to determine whether the total power of carrier group CG0 and carrier group CG1 is less than or equal to the maximum transmission power of the terminal. If so, stop discarding. If not, continue discarding PSSCH1 and re-evaluate whether the total power of carrier group CG0 and carrier group CG1 is less than or equal to the maximum transmission power of the terminal. The above process can be repeated until the total power of carrier group CG0 and carrier group CG1 is less than or equal to the maximum transmission power of the terminal.

In another exemplary implementation, taking carrier group priority and PSSCH priority as an example to illustrate the discarding process. For example, the carrier group priority of carrier group CG0 is higher than that of carrier group CG1. The carriers in carrier group CG0 carry PSSCH0 and PSSCH1 respectively, and the carriers in carrier group CG1 carry PSSCH2 and PSSCH3 respectively. The priority order of PSSCH from high to low is that PSSCH0 is higher than PSSCH2, PSSCH2 is higher than PSSCH1, and PSSCH1 is higher than PSSCH3. If the total power of multiple carrier groups is greater than the maximum transmission power of the terminal, the power will be allocated to the carriers in CG0 first, and the carriers in CG1 will be discarded. The lower priority PSSCH will be discarded in CG0 until the total power of multiple carrier groups is less than or equal to the maximum transmission power of the terminal. It can be understood that when discarding at least one of the carrier group, carrier, channel, or service based on the first information, there can also be application priority between the carrier group priority, carrier priority, channel priority, service priority, priority indicated by sidelink control information, pre-configured priority, etc. in the first information. For example, the carrier group priority is superior to the PSSCH priority for discarding.

In the embodiments of the present application, the method further comprises that a feedback channel carrier is determined by the carrier index or cell index.

In the embodiments of the present application, at the first entity, the feedback channel carrier can also be determined by the carrier index or cell index, that is, the carrier of the feedback channel can be determined by carrier index or cell index.

In other embodiments of the present application, the method further comprises that a feedback channel carrier function is enabled or disabled via at least one of configuration or pre-configuration.

In the embodiments of the present application, the feedback channel carrier function is enabled or disabled via configuration or pre-configuration, for example, the binary value "0" corresponding to a signaling for enabling or disabling the feedback channel carrier function indicates enabling the feedback channel carrier function; while the binary value "1" corresponding to the same indicates disabling the feedback channel carrier function. The enabling or disabling range can be for each carrier group, frequency band, or terminal.

Fig. 3 is a schematic diagram of the structure of a carrier aggregation apparatus provided in the embodiments of the present application, this apparatus can execute any of the carrier aggregation methods provided in the embodiments of the present application, and has corresponding functional modules and beneficial effects for executing the methods. This apparatus can be implemented by software and/or hardware. As shown in Fig. 3, the apparatus provided in the embodiments of the present application comprises a carrier aggregation apparatus 301, which is used to determine the carrier group and the carriers included in the carrier group at the first entity via configuration or pre configuration.

Furthermore, based on the above application embodiments, the first entity comprises at least one of: a network node, a terminal node, a radio resource control layer, a radio link control layer, a medium access control layer, or a physical layer.

In the embodiments of the present application, the number of carrier groups within the apparatus is configured based on at least one bit, and the number of bits is determined by the maximum number of carrier groups.

In the embodiments of the present application, the carriers included in the carrier group of the carrier aggregation apparatus are determined based on a carrier index or a cell index.

In the embodiments of the present application, the system further comprises a carrier group function module for enabling or disabling a carrier group function via at least one of configuration or pre-configuration.

In other embodiments of the present application, the apparatus is also used for determining a group level via configuration or pre-configuration, wherein the group level comprises at least one of a carrier group level or a frequency band level.

In the embodiments of the present application, the carriers included in the carrier group within the system are configured with at least one bandwidth part.

Based on the above application embodiments, each carrier within the system is configured with one bandwidth part, and the bandwidth parts configured for different carriers have different numbers of symbols, and the carriers of which the bandwidth parts have the same number of symbols form the carrier group.

Based on the above application embodiments, each carrier within the system is configured with at least two bandwidth parts, the bandwidth parts within the carrier or between the carriers have different numbers of symbols, and the carriers of which the bandwidth parts have the same number of symbols form the carrier group.

In the embodiments of the present application, the same synchronization reference is used within the carrier group, and different synchronization references are used among different carrier groups.

Based on the above application embodiments, the synchronization reference comes from a synchronization source of a specific carrier or a synchronization source of a specific node.

In the embodiments of the present application, the system further comprises a power discrimination apparatus, used for enabling that the total power of each carrier group is less than or equal to the maximum transmission power of the terminal based on a first information, wherein the first information comprises at least one of carrier group priority, carrier priority, channel priority, service priority, priority indicated by the sidelink control information, or pre-configured priority.

In the embodiments of the present application, if the total power of each carrier group is greater than the maximum transmission power of the terminal, the power discrimination apparatus is further used for discarding at least one of the carrier group, carrier, channel, or service according to the first information.

In the embodiments of the present application, the system further comprises a feedback channel determination apparatus, used for determining a feedback channel carrier via the carrier index or cell index.

In other embodiments of the present application, the system further comprises a feedback enabling apparatus, used for enabling or disabling the feedback channel carrier function via at least one of configuration or pre-configuration.

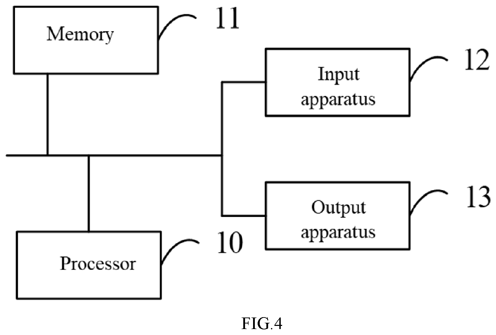

Fig. 4 is a schematic diagram of the structure of an electronic device provided in the embodiments of the present application. The electronic device comprises a processor 10, a memory 11, an input apparatus 12, and an output apparatus 13; The number of processors 10 in the electronic device can be one or more, as shown in Fig. 4 with one processor 10 as an example; The processor 10, memory 11, input apparatus 12, and output apparatus 13 in the electronic device can be connected via a bus or other means, in Fig. 4, taking connection via a bus as an example.

The memory 11, as a computer-readable storage medium, can be used to store software programs, computer executable programs, and modules, such as the module corresponding to the apparatus (carrier aggregation apparatus 301) in the embodiments of the present application. The processor 10 executes various functional applications and data processing of electronic devices by running software programs, instructions, and modules stored in the memory 11, thereby implementing the carrier aggregation method described above.

The memory 11 may mainly include a storage program area and a storage data area, wherein the storage program area may store an operating system and at least one application program required for a function; The storage data area can store data created based on the use of electronic devices. In addition, the memory 11 may include high-speed random access memory, as well as non-volatile memory such as at least one disk storage device, flash memory device, or other non-volatile solid-state storage device. In some examples, the memory 11 may further include memory remotely located relative to the processor 10, which can be connected to electronic devices through a network. Examples of the above network include but are not limited to the Internet, enterprise intranet, local area network, mobile communication network and combinations thereof.

The input apparatus 12 can be used to receive input numerical or character information, as well as generate key signal inputs related to user settings and functional controls of electronic devices. The output apparatus 13 may include display devices such as a screen.

The embodiments of the present application also provide a storage medium containing computer executable instructions, which, when executed by a computer processor, are used to perform a carrier aggregation method. The method comprises: determining a carrier group and carriers included in the carrier group via configuration or pre-configuration at a first entity.

Through the above description of the implementations, those skilled in the art can clearly understand that the present application can be implemented by means of software and necessary general hardware. Of course, it can also be implemented through hardware, but in many cases, the former is the better implementation. Based on this understanding, the technical solution of the present application can essentially or contribute to the prior art in the form of a software product, which can be stored in computer-readable storage medium such as floppy disks, Read Only Memory (ROM), Random Access Memory (RAM), Flash memory (FLASH), hard disks, or optical disks, including several instructions for a computer device (which can be a personal computer, server, or network device) to execute the carrier aggregation method described in various embodiments of the present application.

It should be noted that in the embodiments of the above apparatus, the various units and modules included are only divided according to functional logic, but are not limited to the above division, as long as they can achieve the corresponding functions; In addition, the names of each functional unit are only for ease of distinction and are not intended to limit the scope of protection of the present application.

Those skilled in the art can understand that all or some of the steps, apparatus, and functional modules/units in the methods disclosed above can be implemented as software, firmware, hardware, and appropriate combinations thereof.

In hardware implementation, the division between functional modules/units mentioned in the above description does not necessarily correspond to the division of physical components; For example, a physical component can have multiple functions, or a function or step can be executed collaboratively by several physical components. Some or all physical components can be implemented as software executed by processors such as central processing units, digital signal processors, or microprocessors, or as hardware, or as integrated circuits such as application specific integrated circuits. The corresponding software can be distributed on computer-readable medium, which can include computer storage medium (or non-transitory medium) and communication media (or transitory medium). As is well known to those skilled in the art, the term computer storage medium includes volatile and non-volatile, removable and non-removable medium implemented in any method or technology for storing information, such as computer-readable instructions, data structures, program modules, or other data. Computer storage medium include but are not limited to RAM, ROM, EEPROM, flash memory, or other memory technologies, CD-ROM, Digital versatile disc (DVD) or other optical storage, magnetic cassette, magnetic tape, magnetic disk storage or other magnetic storage apparatus, or any other medium that can be used to store desired information and can be accessed by a computer. In addition, it is well known to those skilled in the art that communication medium typically include computer-readable instructions, data structures, program modules, or other data in modulated data signals such as carriers or other transmission mechanisms, and may include any information delivery medium.

The above content refers to the preferred embodiments of the present application with reference to the accompanying drawings, and does not limit the scope of the claims of the present application. Any modifications, equivalent substitutions, and improvements made by those skilled in the art without departing from the scope and essence of the present application shall be within the scope of the claims of the present application.

## Claims

1. A carrier aggregation method, comprising:
determining, at a first entity via configuration or pre-configuration, a carrier group and carriers comprised in the carrier group.

2. The method according to claim 1, wherein the first entity comprises at least one of:
a network node, a terminal node, a radio resource control layer, a radio link control layer, a medium access control layer, or a physical layer.

3. The method according to claim 1, wherein a number of carrier groups is configured based on at least one bit, and a number of bits is determined by a maximum number of carrier groups.

4. The method according to claim 1, wherein the carriers comprised in the carrier group are determined based on a carrier index or a cell index.

5. The method according to claim 1, further comprising:
enabling or disabling a carrier group function via at least one of configuration or pre-configuration.

6. The method according to claim 1, further comprising:
determining a group level via configuration or pre-configuration, wherein the group level comprises at least one of a carrier group level or a frequency band level.

7. The method according to claim 1, wherein the carriers comprised in the carrier group are configured with at least one bandwidth part.

8. The method according to claim 7, wherein each carrier is configured with one bandwidth part, the bandwidth parts configured for different carriers have different numbers of symbols, and the carriers of which the bandwidth parts have the same number of symbols form the carrier group.

9. The method according to claim 7, wherein each carrier is configured with at least two bandwidth parts, the bandwidth parts within the carrier or between the carriers have different numbers of symbols, and the carriers of which the bandwidth parts have the same number of symbols form the carrier group.

10. The method according to claim 1, wherein same synchronization reference is used within the carrier group, and different synchronization references are used among different carrier groups.

11. The method according to claim 10, wherein the synchronization reference comes from a synchronization source of a specific carrier or a synchronization source of a specific node.

12. The method according to claim 1, further comprising: enabling the total power of each carrier group to be less than or equal to maximum transmission power of a terminal based on first information, wherein the first information comprises at least one of carrier group priority, carrier priority, channel priority, service priority, priority indicated by sidelink control information, or pre-configured priority.

13. The method according to claim 12, further comprising:
discarding, upon the condition that the total power of each carrier group is greater than the maximum transmission power of the terminal, at least one of a carrier group, a carrier, a channel, or a service according to the first information.

14. The method according to claim 1, further comprising: determining a feedback channel carrier by a carrier index or a cell index.

15. The method according to claim 14, further comprising:
enabling or disabling a feedback channel carrier function via at least one of configuration or pre-configuration.

16. A carrier aggregation system, the system comprising:
a carrier aggregation apparatus, used to determine a carrier group and carriers comprised in the carrier group at a first entity via configuration or pre-configuration.

17. An electronic device, comprising:
one or more processors;
a memory, used to store one or more programs;
when the one or more programs are executed by the one or more processors, causing the one or more processors to implement the carrier aggregation method according to any one of claims 1-15.

18. A computer-readable storage medium storing one or more programs, which are executed by one or more processors to implement the carrier aggregation method according to any one of claims 1-15.
